# EUROPEAN PATENT SPECIFICATION

(11) **EP 3 858 889 B1**
(45) Date of publication and mention of the grant of the patent: **17.07.2024**
(21) Application number: 19865969.0
(22) Date of filing: 29.03.2019
(51) Int. Cl.: B01J 27/26, B01J 23/89, C08G 64/34, C08G 64/02, C08G 65/26

(54) **MIXED ACID-MODIFIED ZINC-COBALT TWO-METAL CYANIDE CATALYST AND PREPARATION METHOD THEREOF**
MISCHSÄUREMODIFIZIERTER ZINK-KOBALT-ZWEIMETALLCYANIDKATALYSATOR UND VERFAHREN ZU SEINER HERSTELLUNG
CATALYSEUR DE CYANURE BIMÉTALLIQUE DE ZINC-COBALT MODIFIÉ PAR UN ACIDE MIXTE ET SON PROCÉDÉ DE PRÉPARATION

(30) Priority: 29.09.2018 CN 201811145851; 02.02.2019 CN 201910108123; 15.03.2019 CN 201910199743; 24.03.2019 CN 201910224871
(43) Date of publication of application: 04.08.2021
(73) Proprietor: Hefei POLY Advanced Materials Technology Co., LTD, Chaohu City, Hefei City, Anhui Province (CN)
(72) Inventor: LUO, Ming, Zhejiang 311113 (CN); MAO, Hongbing, Zhejiang 311113 (CN)
(74) Representative: Chung, Hoi Kan
(86) International application number: PCT/CN2019/080505
(87) International publication number: WO 2020/062816

(56) References cited:
- WO-A1-01/04180
- WO-A1-99/56874
- CN-A- 1 360 608
- CN-A- 1 500 554
- CN-A- 101 928 390
- US-A- 4 472 560
- US-A1- 2008 167 502
- US-A1- 2010 234 647

## Description

### FIELD OF THE DISCLOSURE

The disclosure relates to the chemical field, particularly to a mixed-acid modified zinc-cobalt double metal cyanide catalyst and its preparation method thereof.

### BACKGROUND OF THE DISCLOSURE

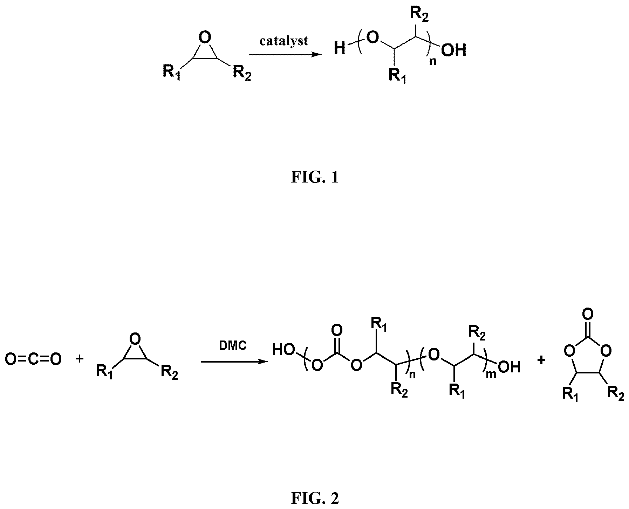

Double metal cyanide (DMC) catalyst was first reported by General Tire & Rubber Company in the 1960s. It was originally used as a catalyst for the ring-opening polymerization of epoxides to prepare polyether polyols (as shown in FIG. 1). The polyether polyols prepared by DMC have the characteristics of low saturation, high molecular weight and narrow distribution, which are obviously better than traditional KOH catalysts. Since the 1980s, DMC catalysts have been gradually paid attention to and applied in industry and scientific research. Up to now, low saturation, high molecular weight, narrow distribution polyether polyols prepared by DMC catalyst have become one of the main products of BASF, Bayer, Dow Chemical, Zhejiang Huangma Chemical Group and other companies. In addition, a lot of researches have been made on their catalytic properties and application fields.

In recent years, the improved DMC catalyst can effectively catalyze the copolymerization of epoxides with carbon dioxide to synthesize a class of polymers comprising both polycarbonate and polyether linkages. The reaction can be divided into two broad categories depending on whether or not an initiator (or chain transfer agent) is added to the system:

One is that without adding any additional additives or chain transfer agents, polycarbonate polymers with certain mechanical strength with molecular weight of tens of thousands can be obtained by this reaction, accompanied by a certain amount of cyclic carbonate byproducts (as shown in FIG. 2). At present, a large number of papers and patents have reported this chemical reaction. The most widely used epoxide in the industrialization of this reaction is propylene oxide (PO), due both to its low cost and relatively high safety in storage and transportation. Propylene oxide and carbon dioxide in the DMC catalyzed reaction of polycarbonate as poly propylene carbonate (PPC), whose molecular structure simultaneously comprises polycarbonate and polyether linkages. Depending on the proportion of the polyether and the polycarbonate linkages in structure, PPC generally exhibits a glass transition temperature of 20 to 37°C (can be understood as a plastic's thermal distortion temperature). The industry also actively develops the PPC as an application of a common plastic but due to the deformation temperature is too low, it is difficult to replace the existing plastic or competition.

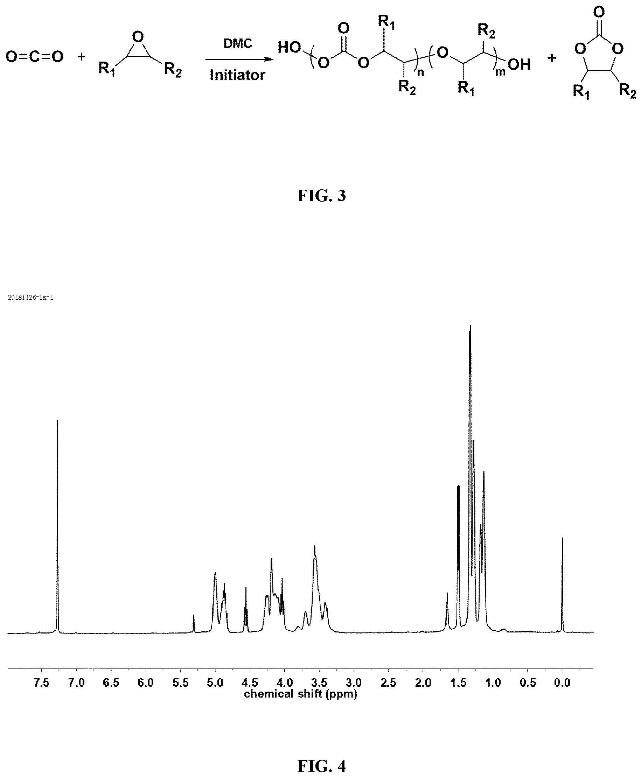

The reaction of the other categories is adding initiator to the system. By the copolymerization of epoxide with carbon dioxide as well as the active H-functional groups in initiator, polycarbonate polyether polyol can be obtained, whose polymer structure that comprises both polycarbonate and polyether linkages, offering it high Young's modulus and flexibility, can be used in the preparation of polyurethane materials. The reaction is as shown in FIG. 3, including here for the chain linkages of structure shown should be understood as only said in principle can be found in the polycarbonate polyether polyols, but the order of the chain linkages, number and length, and the initiator of the OH functionality can change and is not limited to shown polycarbonate polyether polyols in FIG. 3. The reaction is beneficial to environmental protection and energy reduction because it uses carbon dioxide, a greenhouse gas, as a feedstock and turn carbon dioxide into polymer materials. In addition, this reaction is often accompanied by a byproduct, cyclic carbonate, which is also a common industrial product and in this reaction, can be separated and purified for later sale. It should be noted that the zinc-cobalt double metal cyanide catalyst of the present disclosure is used to catalyze the reaction shown in FIG. 3 and not the reaction shown in FIG. 1 and FIG. 2.

DMC catalysts are usually formed by precipitation reaction of water-soluble cyanide complexes and metal compounds in the presence of organic coordination agents. DMC catalyst is heterogeneous, that is, insoluble in any solvent. In the reaction system, it is always in the state of particle dispersion. The composition and structure of DMC catalyst are very complex, and belong to the non-stoichiometric ratio, that is, its composition structure cannot be written into the integer composition of some molecules. So far, for several types of polymerization of epoxide involved, it is generally found two types of DMC catalyst based on zinc-cobalt (Zn-Co) and nickel and zinc (Zn-Ni) have a better effect on catalytic activity, while Zn-Co DMC catalyst on product selectivity is more superior to Zn-Ni DMC catalyst. Hence Zn-Co DMC catalyst has more industrialization prospect. And according to a report in the existing literature, the introduction of a third or more metal into DMC catalyst failed to have the effect of active site. The activity and selectivity of this kind catalyst is not more excellent than two types of DMC catalyst based on Zn-Co and Zn-Ni. In addition, the introduction of a variety of metal leads to more complex process that is not a benefit to industrialization.

In the prior art, such as the Chinese authorized disclosure patents CN100484984C, CN104987502B, CN1063984C, CN1289194C, CN101928390B, CN102580780B, the method of synthesis and preparation of Zn-Co DMC catalyst can be summarized as follows: water-soluble metal salt or water-soluble metal cyanide comprising zinc and cobalt are used to co-precipitate in water-soluble solvent. Ligands, chelating agents or organic complexing agents can be added to the water-soluble solution at the same time. After the precipitation is obtained, the precipitation is washed and dried to obtain Zn-Co DMC catalyst finally. The solvents and raw materials used in the above methods are all neutral and do not comprise free hydrogen ions, that is, do not comprise acidic substances.

In the prior art, another method of synthesizing Zn-Co DMC catalyst is doping or loading, which can be uniformly understood as doping in this field. For example, the Chinese authorized disclosure patent CN101003622B uses orthosilicate or titanate for co-precipitation synthesis and hydrolysis to obtain silicate or titanate doped or supported Zn-Co DMC catalyst. China authorized disclosure patent CN101831064B uses rare earth metal coordination compound to dope zinc hexacyanocobaltate (III). In essence, the active ingredients of the above methods are still rare earth complexes and part of unfixed zinc hexacyanocobaltate (III). The solvents and raw materials used in the above methods are all neutral and do not comprise free hydrogen ions, that is, do not comprise acidic substances.

In the prior art, another method of synthesizing Zn-Co DMC catalyst is to use the metal salt or metal cyanide of two kinds metals of zinc and cobalt in the ball mill through dry grinding or wet grinding by adding water-soluble solvent to form the Zn-Co DMC catalyst, whose core active compound is still zinc hexacyanocobaltate (III). For example, Z. Li et al. reported in the paper (European Polymer Journal. 47, 2011, 2152-2157), Zn-Co DMC catalyst was prepared by ball milling with deionized water and tert-butanol as solvents and zinc chloride and potassium hexacyanocobaltate (III) as raw materials. In essence, the above method is still to form zinc hexacyanocobaltate (III). The preparation process of ball milling is used to reduce the microscopic size of zinc hexacyanocobaltate (III) and promote the formation of amorphous zinc hexacyanocobaltate (III). No acid was added to the system as raw material or modifier.

In the reported patents related to double metal cyanide catalyst, there are also some cases by adding acid to the system (can be organic or inorganic acid). The purpose to add acidic substances is to neutralize the alkaline substances in the reaction, but the acid itself is not involved in the synthesis process of DMC catalyst, i.e., acidic substances have no prejudice to the structure and activity of DMC. Such technologies are called as "acid treatment". For example, in the China authorized disclosure patent CN1116336C, it did not specify the synthesis methods of double metal cyanide catalyst. In the use of the DMC catalyst for catalytic glycerin alkoxy, the effective dose of acid added into the reactor is to prevent the deactivation of DMC catalyst, because the acid can react with the acid sensitive initial substance of glycerol and avoid catalyst deactivation, which has nothing to do with the catalyst preparation process, nor improve the performance of the catalyst by controlling the catalyst preparation conditions. In the Chinese disclosure patent CN1589966A, when preparing double metal cyanide catalyst, adding acid (hydrochloric acid) is used to neutralize the cheap and high alkalinity zinc chloride salt. Obviously, the purpose of adding acid is to modify the alkalinity of the raw material, making it neutral and to meet the use of its subsequent steps. Therefore, on the one hand, the amount of acid added is designed according to the alkalinity of the original material, which does not reflect the influence on the structure of the catalyst during the formation process. On the other hand, organic acids are not added into the synthesis method, which cannot improve the metal coordination situation during the formation process of the catalyst. In Chinese disclosure patent CN1670007A, it adopts double metal cyanide catalyst for synthesis of polyether process, adding acid in the starting material is used to neutralize alkaline substances of starting materials. In the 0030 segment of the disclosure patent, it specifically recorded that alkali would passivate DMC catalyst. The technology of using alkaline catalyst used in the preparation of low poly starting raw materials will affect or destruct the activity of DMC catalyst used in the synthetic process. Therefore, adding acid into the starting materials is to neutralize or appropriately acidification, ensuring that in the activity of DMC catalyst in the synthesis process of polyether. The acid added into the catalyst is only the auxiliary agent in the process, which is not involved into the synthesis and preparation of DMC catalyst, let alone improve the performance of the catalyst by controlling the preparation conditions of the catalyst. In the China disclosure patent CN107200837A, in the synthesis process of polyether with double metal cyanide catalyst, adding acid as additive is also to neutralize alkaline catalyst residues in raw materials, ensuring that the activity of double metal cyanide catalyst, which is not involved in the synthesis of catalyst preparation, nor by controlling the catalyst preparation conditions to improve the performance of the catalyst. China disclosure patent CN101851329A released a double metal cyanide catalyst that can acidify the system for the polyether synthesis. This method is adding a certain proportion of inorganic acid or organic acid based on the weight of the initial content of polyol raw materials, whose purpose is to neutralize the alkaline impurity in the starting material of polyols and to ensure the process of the activity of the catalyst, not involved in the synthesis of catalyst preparation, nor by controlling the catalyst preparation conditions to improve the performance of the catalyst. China disclosure patent CN101108896A released a production method of polyether of high moisture resistance. As the starting reaction catalyzed by the double metal cyanide catalyst, 10 ppm to 2000 ppm of inorganic proton acid or organic acid is introduced in the reactor to acidify. Its usage is calculated according to the weight of the starting polyols material, and its function also is to neutralize the alkaline impurity in the starting material of polyols, to ensure the activity of the catalyst in the process, not involved in the synthesis of catalyst preparation, nor by controlling the catalyst preparation conditions to improve the performance of the catalyst. China disclosure patent CN1299300A released a method that a certain amount of proton acid before polymerization is added to reduce the production of impurities of high molecular weight during the preparation of polyether polyols catalyzed by the double metal cyanide complex catalyst. In this method, the double metal cyanide complex catalyst is already synthesized well ahead of the polymerization, and proton acid adding is also prior to the polymerization reaction, which is supposed to improve the process of polymerization. Patent WO2011160797 discloses an improved method of DMC catalyst, that is, a synthesized or existing DMC catalyst is treated with Bronsted acid and an organic ligand.

PCT Publication No. WO 01/04180 A, disclosed a metal cyanide catalysts are prepared in the presence of an organic polyacid. Active alkylene oxide polymerization catalysts are formed that have larger particle sizes than conventional metal cyanide catalysts, and thus are more easily separated from a polymer prepared with the catalyst. Preferred organic polyacids are crosslinked or uncrosslinked polymers containing pendant carboxyl or carboxylate groups.

U.S. patent publication No. 2008/167502 A1 disclosed a process for preparing DMC catalysts by reaching cyano-metalate compounds, preferably cyanometallate salts, in particular alkali metal or alkaline earth metal salts, with metal salts, wherein the reaction is carried out in the presence of a Bronsted acid.

U.S. patent No. 4472560 A disclosed a process for the polymerization of epoxides using as catalyst a double metal cyanide-type compound is described wherein said process i9s carried out in the presence of at least (a) one or more salts composed of at least bivalent metal ions and metal-free anions, having a solubility in water of at least 1 g/100 ml at 25° C., and/or (b) one or more non-metal containing acids of which a 0.1 N solution in water at 25° C. has a pH not exceeding 3.

PCT publication No. WO 99/56874 A1 disclosed acid-treated double metal cyanide complex catalysts. The amount of high molecular weight impurity present in a polyether polyol produced by alkoxylation of an active hydrogen-containing initiator and a substantially noncrystalline highly active double metal cyanide complex catalyst may be advantageously lowered by treating the catalyst prior to use in polymerization with a protic acid. Suitable protic acids include phosphoric acid and acetic acid. The higher purity polyether polyols thereby produced are particularly useful in the preparation of slab and molded polyurethane foams, which tend to collapse or become excessively tight when elevated levels of high molecular tail are present in the polyether polyol.

The problem of Zn-Co DMC catalysts currently used in industry for synthesis of polycarbonate polyether polyols (as shown in FIG. 3) is only when the mass ratio of the catalyst and epoxide monomer is at least 1/1000 or less (namely 1000 ppm, 0.1wt%), the overall production cost and the cost of catalyst residues was relatively low with economic value, otherwise there is no application value due to the increased cost of production caused by too much amount of the catalyst. It is important to mention that, as an industrial raw material, polycarbonate polyether polyols with lower molecular weight (average molecular weight of 500 to 2000) have wider application and more commercial value. Adding initiator in the starting raw material of reaction is an important or even the only means to control the molecular weight of the final polymer. For synthesis polycarbonate polyether polyols of small molecular weight target (the number average molecular weight of 500 to 2000), the ratio of initiator needed to add is higher (typically moles epoxide monomers 1/50 to 1/90), and under this kind of condition, the catalyst will lose big division in activity, or a few remained weak activity, but the reaction time will be greatly extended (more than 12 hours) to obtain polymer. This is because the high ratio of initiator passivates the catalyst, which lengthen the period of the catalyst of the activation process of reactants (extended hours). It takes longer reaction time and more energy consumption, which increases the production cost.

In addition, under the condition of adding the above higher proportion of initiator, the structure proportion of polycarbonate in the structure of the synthesized polycarbonate polyether polyol will decrease (< 50%), that is, the fixation rate of carbon dioxide will decrease. Because the addition of a higher proportion of initiators will lead to a large number of catalyst active sites quenched or occupied, macroscopically reflected in the catalyst activity decreased or even deactivation. A decrease in the carbon dioxide fixation rate indicates a decrease in the proportion of the low-cost carbon dioxide feedstock in the polymer, and an increase in the proportion of the costlier epoxides, which leads to an increase in the production cost of the polymer and a decrease in the efficiency of energy saving and emission reduction (carbon dioxide consumption).

In addition, under the condition of adding the above high proportion of initiator, the structure proportion of polycarbonate in the synthesized polycarbonate polyether polyol will decrease (< 50%), that is, the fixation rate of carbon dioxide will decrease. Because the addition of a high proportion of initiators will lead to a large number of active sites of catalyst quenched or occupied, macroscopically reflected in the decrease or even deactivation of catalyst activity. A decrease in fixation rate of carbon dioxide indicates a decrease in the proportion of the low-cost carbon dioxide feedstock in the polymer, and an increase in the proportion of the costlier epoxides, which leads to an increase in the production cost of the polymer and a decrease in the efficiency of energy saving and emission reduction (carbon dioxide consumption).

### SUMMARY OF THE DISCLOSURE

The present invention is disclosed in and by the appended claims.

To overcome the shortcomings of existing technology, the technical problem to be solved by the present disclosure is to provide a method to synthesize a zinc-cobalt double metal cyanide (Zn-Co DMC) catalyst of higher catalytic activity and selectivity and their preparation method. Under the condition that the amount ratio of the catalyst possesses the industrial production value (the mass ratio of catalyst and epoxide ≤ 1/1000, i.e. 0.1wt%), this method provides Zn-Co DMC catalysts of high catalytic activity (the reaction time of 1 to 2 hours, the monomer conversion more than 50%) in the higher proportion of initiator (the amount of initiator is 1/50 to 1/90 of the epoxide monomers moles), and obtains polycarbonate polyether polyol with narrow molecular weight distribution and carbon dioxide fixation rate (i.e., the carbonate structure on the polymer backbone) of > 50%.

In order to solve the technical problem of the disclosure, the first purpose of the disclosure is to provide a mixed-acid modified zinc-cobalt double metal cyanide (Zn-Co DMC) catalyst. Besides impurities, there are only two metal elements in the catalyst. The two metal elements are zinc and cobalt metal elements. The catalyst is obtained by reacting water-soluble metal salt of zinc and cobalt in water-soluble solvent, and the water-soluble metal salt of cobalt is cyanide salt of cobalt.

The catalyst is modified by a mixed acid during synthesis of the catalyst, and the mixed acid comprises at least one organic acid and at least one water-soluble inorganic acid.

The water-soluble inorganic acid is selected from the group consisting of diluted sulfuric acid and diluted hydrochloric acid, with a pH value being in the range of 0 to 5; preferably 0 to 4; more preferably 1 to 3; more preferably 1 to 2.

The organic acids are any one or more selected from the group consisting of succinic acid, glutaric acid, phthalic acid, iminodiacetic acid, pyromellitic acid, 1,2,3,4-butanetetracarboxylic acid, the water-soluble inorganic acid and organic acid being in a molar ratio of 1: 10 to 10: 1.

According to what is known in the field, in the presence of acid or strong acid, metal coordination cyanide can produce highly toxic hydrogen cyanide (HCN) gas, which can cause fatal injury to humans. Above that, strong acid may destroy the coordination structure of the compound. Therefore, acids should not be used in the synthesis of Zn-Co DMC catalyst. Unexpectedly, however, in the process of the preparation of zinc cobalt DMC catalyst in the present disclosure, certain mixed acid added in accordance with the specific proportion to modify will not lead cyanide decompose into highly toxic hydrogen cyanide in this reaction system. On the contrary, the mixed acid will join into the co-participation process of the water-soluble zinc salt and water-soluble cyanide cobalt salt, and generate synergy to occur the complexing reaction of inorganic acid metals, forming the three-dimensional porous mesh structure of multi-metal center and multi-bridge bonding. At the same time, the presence of inorganic proton acids destroys the potential formation of the crystal lattice. Because of the above two synergic effects, it not only increases the specific surface area of the catalyst, but also destroys or reduces the existence of crystal lattice, improving the proportion of amorphous structure of the catalyst, as well as the thermal stability of the catalyst. By increasing the activity of the catalyst, the activation energy barrier of the polymerization substrate can be reduced, and the catalytic reaction can be completed at a relatively lower temperature and a lower catalyst concentration. It needs to be emphasized that inorganic protic acids must use non-oxidizing and non-reducing diluted sulfuric acid and diluted hydrochloric acid, which can ensure the supply of free hydrogen ions, and will not affect the valence and coordination number of the metal due to the redox reaction. Also it must be matched with organic acid of complexing ability, selected from the group consisting of succinic acid, glutaric acid, phthalic acid, amino acetic acid, benzene tetracarboxylic acid, and1,2,3,4-butanetetracarboxylic acid. This organic acid is used because they possess the metal coordination ability with the tooth number of 2 to 4, and chemical bonds number of the close coordination oxygen of 5 to 6. The test results showed that such organic acids can provide a relatively stable and space steric size appropriate coordination environment, and to promote polymerization monomer contact with the active site. Under the synergy of the inorganic acid and organic acid in certain proportion, firstly metal complexing reaction was occurred, and organic acid and metal was formed into the three-dimensional porous mesh morphology with multi-metal center and multi-bridge bonding. Then the acid environment provided by organic acid can affect this formed ligand metal compounds, destroy or reduce the existence of lattice, and improve the proportion of the amorphous structure in catalyst, not only increasing the specific surface area, and also greatly improving the thermal stability of the catalyst.

The astonishing thing is that the disclosure characterized the insoluble precipitation with the main body of the Zn-Co DMC catalyst after washing and drying ways. It was found that a high proportion of amorphous structure, and coordination environment of zinc and cobalt as well as the ligand atoms are complex and diverse. When using in the copolymerization of carbon dioxide and epoxides, the catalyst showed excellent activity and selectivity, and had catalytic activity at low temperature with shorter catalytic time. Polymer product was generated even in 5 minutes in the reaction in autoclave reactor, which had not been achieved in the existing Zn-Co DMC catalysts.

The mechanism of Zn-Co DMC catalyst improved by mixed acid modification was explained. In short, the mixed acid in the preparation of Zn-Co DMC catalyst increases the coordination diversity of the metal center and disrupts the crystal growth of the co-precipitates of water-soluble zinc salts and water-soluble cobalt cyanide salts. It is generally believed that the lower the crystallinity of DMC catalyst, the higher catalytic activity. The reasons may be as follows: 1) The amorphous aggregated structure is actually the aggregation of nanoscale polycrystalline grains, which provides more specific surface area and potential catalytic active center for DMC catalyst, thus increasing the dispersion of the catalyst and the contact area with the reaction monomer;2) Because the number of Zn in the volume phase is limited by the coordination with CN,DMC synthesized under the condition of excess ZnCl₂ has excess Zn is mainly distributed on the surface, forming more unsaturated or weakly coordinated surface Zn active centers, which is easy to coordinate with the reaction monomer and initiate the reaction. In this disclosure, mixed acid was added and was participated in the co-precipitation process of the water-soluble zinc salt and water-soluble cyanide cobalt salt. With the synergy effect of acids, metal complexing reactions of inorganic acids occur, and form the three-dimensional porous mesh morphology of multi-metal center and multi-bridge bonding; at the same time, the presence of inorganic proton acid destroyed the potential formation of the crystal lattice. Because of the above two synergic effects, not only the specific surface area was increased, the existence of lattice was also destroyed or reduced, improving the amorphous structure ratio in catalyst, as well as the thermal stability of the catalyst and other performance. By increasing the activity of the catalyst, the activation energy barrier of the polymeric material substrate can be reduced, and the catalytic reaction can be completed at a relatively lower temperature and a lower catalyst concentration.

The DMC catalyst provided by the disclosure comprises two metal elements, zinc and cobalt. Because of the raw materials containing impurities, catalyst may also comprise the impurities that are a small amount of other impurity metals, such as metal potassium, sodium, etc. The content of the impurities is less than 1wt%. A small amount of impurity metal does not result in complete deactivation of the catalyst, but the lower the proportion of impurity metal, the better the catalyst activity.

The DMC catalyst is prepared by the reaction of water-soluble metal salt of zinc and cobalt in the water-soluble solvent. The catalyst is modified by a mixed acid during synthesis of the catalyst, and the mixed acid comprises at least one organic acid and at least one water-soluble inorganic acid, wherein:

The water-soluble inorganic acid is selected from the group consisting of diluted sulfuric acid and diluted hydrochloric acid, with a pH value being in the range of 0 to 5; preferably 0 to 4; more preferably 1 to 3; more preferably 1 to 2.

The diluted sulfuric acid refers to an aqueous solution of H₂SO₄, which can be diluted by adding deionized water with concentrated sulfuric acid to obtain a pH value in the range of 0 to 5; the diluted hydrochloric acid refers to an aqueous solution ofHCl, which can be diluted by adding deionized water with concentrated hydrochloric acid to obtain a pH value in the range of 0 to 5.

Further, the total alkalinity of the raw materials and solvents used in the preparation of the Zn-Co DMC catalyst is less than 0. 1wt%. The alkalinity is the total mass fraction of the substance in the system that can neutralize with the acid. This kind of material includes strong base, weak base, strong base and weak acid salt. The method of measurement is acid titration. For example, the alkalinity of the system can be determined using a laboratory titrator or a digital titrator. The raw material may comprise alkaline impurities, which will neutralize with the modified mixed acid in the system, affecting the actual amount of the modified acid added and the modification effect of the acid. The total alkalinity means that the alkalinity in the raw material and solvent is less than 0. 1wt%.

The reason why diluted sulfuric acid and diluted hydrochloric acid are selected is that they are non-oxidizing and non-reducing acids, which mean that the two acids do not have redox ability and will not result in the change of valence of metal ions. Oxidative acids such as diluted nitric acid, permanganic acid, perchloric acid, and reducing acids such as hydroiodate acid and hydrosulfuric acid, are not included in the scope of use of the present disclosure.

The pH value of the water-soluble inorganic acid used should be controlled in the range of 0 to 5, and should not be too low or too high. If the pH value is too low, such as pH < 0, it means that the acid is too strong, which will not obtain DMC catalyst according to the experimental results of the disclosure. Too strong acidity will weaken the coordination and bridging ability of organic acids to metal atoms, which will lead to the destruction of the three-dimensional structure of the catalyst or the reduction of the proportion, resulting in the failure of catalyst synthesis. On the contrary, if the pH value is too high, that is, pH >0.5, because the inorganic acid used is too weak, it can not play the effect of destroying the lattice and improving the proportion of the catalyst with amorphous form, resulted in reduced catalyst activity. Therefore, it is most appropriate to control the pH value of water-soluble inorganic acid in the range of 0 to 5.

Further, the zinc and cobalt of the catalyst is in a molar ratio of 1:5 to 5:1, preferably 1:4 to 4:1, more preferably 1:3 to 3:1, more preferably 1:2 to 2:1.

There is no correlation between the molar ratio of zinc and cobalt in the catalyst and the molar ratio of zinc and cobalt in the feed. The molar ratio of zinc and cobalt in the catalyst is also affected by the type and proportion of the modified acid added.

Further, the water-soluble inorganic acid and organic acid is in a molar ratio of 1:8 to 8:1, preferably 1:5 to 5:1, more preferably 1:3 to 3:1. Further, the microscopic morphology of the catalyst is polyhedral particles with particle sizes being range from 1nm to 100nm.

Further, the proportion of amorphous states in the catalyst is> 90%, which is characterized by X-ray diffraction (XRD).

The second purpose of the present disclosure is to provide a method for preparing any of the forms of catalysts as previously described, consisting of the following steps.

Step i) At least one water-soluble zinc salt and at least one water-soluble cobalt salt. The water-soluble cobalt salt is a cobalt cyanide salt. The two react in an aqueous solvent in the presence of a mixed acid. The mixed acid comprises at least one organic acid and at least one water-soluble inorganic acid.

The water-soluble inorganic acid is selected from the group consisting of diluted sulfuric acid and diluted hydrochloric acid, with pH value being in the range of 0 to 5; preferably 0 to 4; more preferably 1 to 3; more preferably 1 to 2.

The organic acids are any one or more selected from the group consisting of succinic acid, glutaric acid, phthalic acid, iminodiacetic acid, pyromellitic acid, 1,2,3,4-butanetetracarboxylic acid; The molar ratio of the water-soluble inorganic acid to the organic acid is 1: 10 to 10: 1.

Step ii) The catalyst obtained in step i) was separated, washed and dried for several times until the pH of the detergent was 6 to 7 to obtain the Zn-Co DMC catalyst. When the pH value of the system is washed to 6 to 7, no alkali is introduced, and only the free acid is washed off by solvent washing for many times. The pH value of the system will be changed from acid to nearly neutral.

Further, the water-soluble zinc salts in step i) are selected from the group consisting of zinc chloride, zinc bromide, zinc iodide, zinc sulfate, and zinc acetate.

Further, the water-soluble cobalt salts in step i) are selected from the group consisting of sodium hexacyanocobaltate (III) and potassium hexacyanocobaltate (III).

Further, each step is performed at one or more temperatures in the range of 10 to 100°C, preferably 10 to 80°C, more preferably 20 to 60°C, more preferably 20 to 40°C.

Further, the water-soluble zinc salt and water-soluble cobalt salt in step i) is in a molar ratio of 1:5 to 5:1, preferably 1:4 to 4:1, more preferably 1:3 to 3:1, and more preferably 1:2 to 2:1.

Further, a ratio between the total mass of the water-soluble zinc salt and water-soluble cobalt salt and the mass of the water-soluble solvent is 1:1 to 1:200, preferably 1:1 to 1:100, more preferably 1:1 to 1:50, more preferably 1:1 to 1:20, more preferably 1:1 to 1:10, and more preferably 1:1 to 1:5.

Further, a ratio between the total molar of the water-soluble zinc salt and the water-soluble cobalt salt and the total molar of the mixed acid is 1:10 to 10:1, preferably 1:5 to 5:1, more preferably 1:4 to 4:1, more preferably 1:3 to 3:1, and more preferably 1:2 to 2:1.

Further, the inorganic acid and the organic acid is in a molar ratio 1:10 to 10:1, preferably 1:5 to 5:1, more preferably 1:4 to 4:1, more preferably1:3 to 3:1, and more preferably 1:2 to 2:1.

Further, the water-based solvent is one or more selected from the group consisting of water, methanol, ethanol, propanol and its isomers, butanol and its isomers, amyl alcohol and its isomers, hexanol and its isomers, heptanol and its isomers. Isomers refer to compounds with the same molecular formula, but with different structures. Take butanol and its isomers as an example, including 1-butanol, isobutanol, tert-butanol and other isomers.

Further, the water-based solvent is one or more selected from the group consisting of water, methanol, ethanol, propanol and its isomers, butanol and its isomers, amyl alcohol and its isomers, hexanol and its isomers, heptanol and its isomers. Isomers refer to compounds with the same molecular formula, but with different structures. Take butanol and its isomers as an example, including 1-butanol, isobutanol, tert-butanol and other isomers.

The third purpose of the present disclosure is to provide a chemical reaction using any of the above-mentioned catalysts or catalysts prepared by any of the above-mentioned methods.

Further, the chemical reaction is a polymerization reaction, and the polymerization reaction is the copolymerization of an epoxide with carbon dioxide.

The copolymerization of the epoxide with carbon dioxide is shown in FIG. 3. The initiator in FIG. 3 can be any one or more selected from the group consisting of ethylene glycol, diethylene glycol, 1,2-propylene glycol, 1,3-propylene glycol, 1,4-butanediol, 1,5-butyl glycol, 1,6-adipic alcohol, 1,4-cyclohexanedimethanol, neopentyl glycol, glycerin, trimethylolpropane, trihydroxymethylethane, 1,2,4-butyl alcohol, 1,2,6-hexanetriol, pentaerythritol, dipentaerythritol, succinic acid, glutaric acid, adipic acid, pimelic acid, octyl diacid, azelaic acid, sebacic acid, lauric acid, terephthalic acid, isophthalic acid, phthalic acid, trimesic acid, benzene tetracarboxylic acid, catechol, resorcinol and hydroquinone.

Further, the polymerization reaction is carried out in a continuous reactor at a pressure of 1 to 20MPa and a reaction temperature of 50 to 150°C. Preferably, the reaction pressure is 2 to 15MPa and the reaction temperature is 60 to 120°C. More preferably, the reaction pressure is 3 to 10MPa and the reaction temperature is 70 to 110°C. More Preferably, the reaction pressure is 4 to 6MPa and the reaction temperature is 80 to 100°C.

Further, the polymerization reaction also includes a premixed step of the reaction raw material, and the pressure of the premixed step is 0.1 to 2MPa and the temperature is 10 to 60°C.Preferably, the premixed pressure is 0.2 to 1MPa and the temperature is 30 to 50°C.

Further, the time of the premixed step ranges from 0.1 to 12 hours. Preferably, the premixed time is 1 to 6 hours. More preferably, the premixed time is 1 to 3 hours. Under this pressure, the copolymerization reaction will not occur in advance.

Furthermore, the average residence time in the continuous reactor is 0.5 to 10 hours. Preferably, the retention time is in the range of 1 to 8 hours. More preferably, the retention time is in the range of 3 to 6 hours. The mean residence time can be determined by the ratio between the volumetric flow rate and the reactor volume, where the reactor volume is determined by the inner diameter of the tube or each tube or the length of the tube or the total length of each section. If the residence time is too short, the conversion is usually incomplete, and too long a residence time is usually detrimental in terms of space-time productivity and thus makes the approach less economically viable.

Further, the continuous reactor is a tubular reactor. The tubular reactor is composed of continuous pipe segments.

The continuous reactor is preferred to be made of stainless steel, but other materials may be used provided that the materials are compatible with respect to feedstock/product, pressure, etc.

Further, a continuous reactor may be constructed of continuous segments or one or more tubes connected in series or in parallel. The tube configurations may have different properties such as different inner diameters. The inner diameter of the continuous reactor may be the same or may vary throughout the length. The inner diameter of the tubular reactor is in the range of 10mm to 500mm. Preferably, the inside diameter is in the range of 50mm to 400mm. More preferably, the inside diameter is in the range of 100mm to 400mm. The ratio of the tube length L to the tube diameter dR of the tubular reactor is L/dR >50.

In principle, it may also be possible to have several points along the continuous reactor to add epoxides or mixtures of several epoxides and initiators with active hydrogen functional groups, or mixtures of initiators with active hydrogen functional groups. This allows for more ways to regulate molecular weight and more precise and varied control of polymer terminals. Alternatively, carbon dioxide can be added to the reactor at the addition point to supplement the consumption of carbon dioxide and promote the reaction.

Continuous reactors with an inner diameter in the range of 10mm to 100mm may preferably be operated in conditions without built-in components. Continuous reactors with inner diameters in the range of 100mm to 500mm may preferentially comprise one or more static mixers or a combination of static mixers and heat exchangers (cooling coils).

The advantage is that the overall volume of the continuous reactor is filled with liquid/suspension. Ideally the liquid or suspension is single phase in the case of liquids, in order to ensure particularly good material exchange. This is usually achieved by the temperature and pressure given in the retention step above.

In the method, a dried and ground Zn-Co DMC catalyst (e.g. in a 100°C vacuum oven), initiators with active hydrogen functional groups, epoxides and carbon dioxide are preferentially pumped continuously through one or more tubes. The molar ratio of the reaction participant varies according to the required polymer.

The dried Zn-Co DMC catalyst is preferably added as a suspension in one or more initiators with active hydrogen functional groups.

The concentration of the Zn-Co DMC catalyst in the catalyst suspension is usually in the range of 0.01 to 5wt%, preferably 0.05 to 0.5wt%, based on a catalyst suspension meter comprising the DMC catalyst and initiators active hydrogen functional groups. Suspensions should under all circumstances be kept transferable through conventional pumps, such as diaphragm pumps.

It is advantageous to grind the Zn-Co DMC catalyst to a certain particle size before use. Particles smaller than 500µm is proved suitable. In principle, even smaller particle sizes are even better in order to avoid clogging.

The process is described that one or more initiators with active hydrogen functional groups, ground and dried Zn-Co DMC catalyst and carbon dioxide are mixed in an agitated storage tank at 10 to 60°Cwith a pressure of 0.1 to 2MPa, preferably 30 to 50°Cwith a pressure in the range of 0.2 to 1MPa. The resulting mixture does not react. The resulting suspension is pumped to a continuous reactor using a pump (e.g. a diaphragm pump). The continuous reactor is reached to the temperature in the range of 50 to 150°C, preferred 60 to 120°C, more preferred 70 to 110°C, more preferred 80 to 100°C (preferred through the heat exchanger or the temperature-controlled oil bath), with the pressure adjusted to 1 to 20MPa, preferred 2 to 15MPa, more preferred 3 to 10MPa, more preferred 4 to 6MPa pressure, under the condition of the actual reaction (i.e., one or more epoxide and carbon dioxide added to one or more initiators with hydrogen active functional groups in the presence of Zn-Co DMC catalyst), with the help of a back pressure valve to regulate to maintain the constant pressure required by carbon dioxide. The resulting product (polycarbonate polyether polyol) is collected in a container.

Further, the epoxides are any one or more selected from the group of ethylene oxide, propylene oxide, 1,2-epoxy-butane, 2,3-epoxy butane, styrene oxide, cyclohexene oxide, and epichlorohydrin.

Furthermore, the molar ratio of initiator to epoxide monomer is 1:20 to 1:200. Preferably, the molar ratio is 1:50 to 1:100.

Further, the initiator is any one or more selected from the group consisting of ethylene glycol, diethylene glycol, 1,2-propanediol, 1,3-propanediol,1,4-butanediol, 1,5-butyl glycol, 1,6-adipic alcohol, 1,4-cyclohexanedimethanol, neopentyl glycol, glycerin, trimethylolpropane, trihydroxymethylethane, 1,2,4-butantriol; 1,2,6-hexanetriol, pentaerythritol, pentaerythritol, succinic acid, glutaric acid, adipic acid, pimelic acid, octyl diacid, azelaic acid, sebacic acid, lauric acid, terephthalic acid, isophthalic acid, phthalic acid, trimeric acid, benzene tetracarboxylic acid, catechol, resorcinol and hydroquinone.

The present disclosure provides the double metal cyanide catalyst for polymerization that only comprises two metallic elements zinc and cobalt except the impurity, and is modified by certain proportion of mixed acid in synthesis. The mixed acid comprises at least one organic acid and at least one water-soluble inorganic acid, and the described water-soluble inorganic acid and organic acid is in a molar ratio of 1:10 to 10:1. In the process of preparation, the raw material of zinc and cobalt is fed in the form of metal salts, which have synergic effect with the mixed acid for modification. The occurred metal coordination reaction, to form the three-dimensional porous mesh structure of multi-metal center and multi-bridge of bonding. It not only increases the specific surface area, damages and reduces the existence of lattice, improves the amorphous, structure of catalyst, but also greatly improves the thermal stability of the catalyst and other performance. By increasing the activity of the catalyst, the activation energy barrier of the polymeric monomer can be reduced, and the catalytic reaction can be completed at a relatively lower temperature and a lower catalyst concentration.

Compared with the Zn-Co DMC catalyst prepared by other existing methods, the Zn-Co DMC catalyst provided by the disclosure has the following outstanding advantages:

In the common industrial conditions that the mass ratio of catalyst and ethylene monomer is less than 1/1000, the Zn-Co DMC catalyst shows higher catalytic activity (1 to 2 hours in reaction time, monomer conversion rate greater than 50%) with the higher ratio of the amount of initiator (the amount of initiator in the range of 1/50 to 1/90 of epoxide monomer) and the higher reaction temperature (90 to 100°C). The structure of synthetic polymers comprises a higher proportion of polycarbonate structure (mole percentage > 50%), i.e. the carbon dioxide fixation rate.

### BRIEF DESCRIPTION OF DRAWINGS

FIG. 1 is the equation diagram of the catalyzed ring opening polymerization of epoxide compounds to prepare polyether polyols. In FIG. 1, when the epoxide is mono-substituted structure, R1 is hydrogen atom, and R2 is selected from the group consisting of methyl, ethyl, propyl, isopropyl, n-butyl phenyl, benzyl, phenoxy, benzene methylene methylene, allyl oxygen, vinyl, methyl chloride. When the epoxide possesses di-substituted structure, R1 and R2 can be hydrogen atoms at the same time, and can also form cyclohexyl together. N is a positive integer, indicating the degree of polymerization of the polymer.
FIG. 2 is the equation diagram of the preparation of polycarbonate polymers and cyclic carbonate byproducts through the DMC catalyzed epoxides and carbon dioxide. In FIG. 2, when the epoxide is mono-substituted structure, R1 is hydrogen atom, R2 is selected from the group consisting of methyl, ethyl, propyl, isopropyl, n-butyl phenyl, benzyl, phenoxy, benzene methylene methylene, allyl oxygen, vinyl, methyl chloride. When the epoxide is di-substituted structure, R1 and R2 can be hydrogen atoms at the same time, and can also form cyclohexyl together. M and N are positive integers, indicating the degree of polymerization of the polymer.
FIG. 3 is the equation diagram of the copolymerization reaction of epoxides, carbon dioxide and initials catalyzed by DMC to prepare polycarbonate polyether polyols. In FIG. 3, when the epoxide is mono-substituted structure, R1 is hydrogen atom, R2 is selected from the group consisting of methyl, ethyl, propyl, isopropyl, n-butyl phenyl, benzyl, phenoxy, benzene methylene, allyl oxygen, vinyl, methyl chloride. When the epoxide is di-substituted structure, R1 and R2 can be hydrogen atoms at the same time, and can also form cyclohexyl together. R is the organic group, such as alkyl, phenyl, alkyl carbonyl, benzene carbonyl, etc. m, n are positive integers, indicating the degree of polymerization of the polymer. X is a positive integer greater than or equal to 2, representing the number of hydroxyl groups in the single molecule of the initiator used.
FIG. 4 is the HNMR spectra of the crude products of polycarbonate polyether polyols.

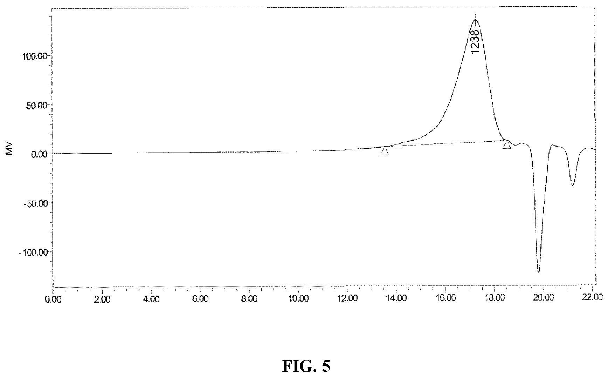

FIG. 5 is the gel penetration chromatographic curve of polycarbonate polyether polyols.

### DETAILED DESCRIPTION OF THE DISCLOSURE

The present invention is disclosed in and by the appended claims.

The above scheme is further explained in combination with specific examples below. It is understood that these examples are intended to illustrate and not to limit the scope of the present disclosure. Conditions of implementation used in the examples can be further adjusted according to the conditions of the specific manufacturer. Conditions of implementation not specified are usually those used in routine experiments.

The present disclosure is illustrated by example rather than by giving restrictions. It should be noted that the references to "one" or "one kind" in this public document do not necessarily refer to the same specific implementation, but to at least one.

The various aspects of the disclosure are described below. However, it is obvious to a technician in the field that the disclosure may be implemented on the basis of only some or all aspects of the disclosure. For illustrative purposes, the specific serial numbers, materials and configurations are given to enable a thorough understanding of the disclosure. However, it will be obvious to a technician in the field that the disclosure can be implemented without the need for specific details. In other cases, well-known features are omitted or simplified in order not to obscure the disclosure.

The operations are described sequentially as separate steps and in such manner as best contributes to the understanding of the disclosure. However, a description of order should not be interpreted to imply that these operations are necessarily sequence-dependent.

The various examples will be illustrated in terms of typical types of reactants. It will be obvious to a technician in the field that the present disclosure may be implemented using any number of reactants of different kinds, not only those reactants given here for illustrative purposes. It will also be evident that the present disclosure is not limited to any particular mixed example.

### Examples 1-8

### Preparation of Zn-Co DMC catalyst

The parameters are shown in Table 1.

The cobalt salt and zinc salt of a certain mass is weighed, dissolved in water-based solvent and stirred continuously. Inorganic acids and organic acids are added and stirred for several hours at temperature i), and precipitation continued to form. The turbid liquid was drained and dried to obtain a filter cake. The filter cake was rinsed and washed again with water-based solvent at temperature ii). After stirring for several hours, the filter cake was extracted and dried to obtain the filter cake. The above steps of rinsing, rinsing and drying were repeated several times at temperature ii) until the liquid pH of the system in the range of 6 to 7. The solid product was further dried at 80 to 100°C under vacuum condition to obtain the final catalyst. Before use, the catalyst was processed into powder particles by mechanical grinding under anhydrous drying condition.

**Table 1**

| Parameters | Example 1 | Example 2 | Example 3 | Example 4 | Example 5 | Example 6 | Example 7 | Example 8 |
|---|---|---|---|---|---|---|---|---|
| cobalt salt species | potassiu m hexacya nocobal tate (III) | sodium hexacya nocobal tate (III) | potassiu m hexacya nocobal tate (III) | sodium hexacya nocobal tate (III) | potassiu m hexacya nocobal tate (III) | sodium hexacya nocobal tate (III) | potassiu m hexacya nocobal tate (III) | sodium hexacya nocobal tate (III) |
| zinc salt species | zinc chlorid e | zinc bromid e | zinc iodide | zinc sulfate | zinc acetate | zinc chlorid e | zinc bromid e | zinc chlorid e |
| molar ratio of cobalt salt to zinc salt | 1:5 | 1:4 | 1:3 | 1:2 | 2:1 | 3:1 | 4:1 | 5:1 |
| Water solvent type | water+ methan ol | water+t ert-butanol | water+ ethanol | water+ propyl alcohol | water | water+ butanol | water+ pentanol | water+ ethanol |
| mass ratio of total metal salt mass/aqueous solvent | 1:1 | 1:5 | 1:10 | 1:20 | 1:50 | 1:100 | 1:200 | 1:10 |
| inorganic acid species | diluted sulfuric acid | diluted hydroc hloric acid | diluted sulfuric acid | diluted hydroc hloric acid | diluted sulfuric acid+di luted hydroc hloric acid | diluted hydroc hloric acid | diluted sulfuric acid+di luted hydroc hloric acid | diluted hydroc hloric acid |
| pH of inorganic acid | 1 | 2 | 3 | 4 | 5 | 0 | 1 | 2 |
| organic acid species | succini c acid | glutaric acid | phthala ndione | iminodi acetic acid | pyrome llitic acid | butane tetracar boxylic acid | succini c acid andpht halandi one | glutaric acid and succini c acid |
| moles of inorganic acid/moles of organic acid | 1:5 | 5:1 | 1:3 | 3:1 | 1:8 | 8:1 | 1:10 | 10:1 |
| total moles of metal salt/total moles of acid | 1:4 | 4:1 | 1:5 | 5:1 | 1:10 | 10:1 | 1:2 | 2:1 |
| Step i) temperature (°C) | 10 | 100 | 20 | 60 | 80 | 40 | 80 | 60 |
| Step ii) temperature (°C) | 80 | 60 | 40 | 20 | 100 | 10 | 80 | 60 |
| Step i) time | 2 | 3 | 6 | 1 | 5 | 3 | 4 | 3 |
| Step i) time | 12 | 6 | 3 | 5 | 10 | 8 | 2 | 4 |

### Examples 9-18

All reaction conditions, parameters and product parameters are shown in Table 2. The reaction steps are summarized as follows:
The DMC catalyst prepared in Examples 1 to 8 is suspended in initiators and epoxides in a premixed container, so that the setting concentration of the catalyst is reached in the mixture. The components are mixed for a certain time at the specified temperature and pressure, and the mixture does not react. The mixed suspension is pumped from the mixer to the continuous reactor at a suitable flow rate. The continuous reactor is controlled at a specified reaction temperature and pressure. Each component remains in the continuous reactor for a specified retention period. The products (polycarbonate polyether alcohol and diverse cyclic propylene carbonate and unreacted epoxide) are collected in a container. The crude product is taken for ¹HnmR (nuclear magnetic resonance) spectroscopy, characterization and calculated the proportion of the polymer and cyclic carbonate products. The ¹HnmR test is carried again after polymer purification, to calculate the ratio of the polycarbonate and polyether linkages on the backbone of the polymer products. For example, the polymer chains only comprise two kinds of structure of polycarbonate and polyether, whose total percentage is 100%. The average molecular weight and molecular weight distribution of the polymer is determined by gel permeation chromatography (GPC). The results are shown in Table 2. The concentration of catalyst in turbid solution (wt%) is the mass ratio of catalyst to epoxide mentioned above.

**Table 2**

| Parameters | Exam ple 9 | Exam ple 10 | Examp le 11 | Examp le 12 | Examp le 13 | Examp le 14 | Examp le 15 | Examp le 16 | Examp le 17 | Example 18 |
|---|---|---|---|---|---|---|---|---|---|---|
| catalyst source ¹ | Exam ple 1 | examp le2 | Examp le 3 | Examp le 4 | Examp le 5 | Examp le 6 | Examp le 7 | Examp le 8 | Examp le 1 | Example 2 |
| epoxide | propyl eneoxi de | ethyle ne oxide | 1, 2-epoxy-butane | 2, 3-epoxy butane | styrene oxide | cycloh exene oxide | epichlo rohydri n | propyle ne oxide | propyle ne oxide | propylen e oxide |
| initiator | glycol | glycer inum | pentaer ythritol | adipic acid | dodeca nedioic acid | terepht halic acid | phthala ndione | pyrocat echol | hydroq uinone | resorcin ol |
| molar ratio of initiator/epoxid e² | 1:50 | 1:60 | 1:80 | 1:100 | 1:60 | 1:90 | 1:80 | 1:200 | 1:70 | 1:20 |
| catalyst concentration in turbid liquid (wt%) | 0.05 | 0.5 | 5 | 0.06 | 0.08 | 0.1 | 0.15 | 0.01 | 0.5 | 0.05 |
| premixed pressure (MPa) | 0.1 | 2 | 0.2 | 1 | 0.2 | 0.4 | 0.6 | 0.3 | 0.5 | 0.2 |
| Premixed temperature (°C) | 10 | 60 | 30 | 50 | 40 | 30 | 20 | 30 | 25 | 30 |
| premixed time (hour) | 0.1 | 12 | 1 | 6 | 1 | 3 | 2 | 2 | 3 | 4 |
| reaction temperature (°C) | 150 | 50 | 120 | 60 | 110 | 70 | 100 | 80 | 90 | 80 |
| reaction pressure (MPa) | 20 | 1 | 15 | 2 | 10 | 3 | 6 | 4 | 4 | 5 |
| mean detention time (h) | 0.5 | 10 | 1 | 8 | 3 | 6 | 4 | 5 | 3 | 5 |
| Epoxide conversion, (%) | 60 | 90 | 56 | 88 | 65 | 62 | 78 | 86 | 73 | 92 |
| Molar percentage of cyclic carbonate⁴ (%) | 28 | 3 | 26 | 5 | 23 | 9 | 19 | 12 | 17 | 13 |
| Molar percentage of polycarbonate linkage in polymer's backbone⁵ (%) | 55 | 91 | 65 | 89 | 58 | 88 | 60 | 71 | 66 | 68 |
| Mn⁶ (kg/mol) | 0.5 | 0.8 | 1.2 | 1.8 | 1.0 | 1.6 | 1.3 | 2.0 | 1.3 | 0.3 |
| PDI⁷ | 2.01 | 1.21 | 1.98 | 1.33 | 1.85 | 1.39 | 1.76 | 1.41 | 1.66 | 1.55 |

| | | | | | | | | | | |
|---|---|---|---|---|---|---|---|---|---|---|
| ¹ Catalysts were prepared from Table 1. ² Molar ratio of initiator versus epoxide when feeding the raw material in the reaction. ³ Epoxide conversion: After the specified reaction time, the conversion rate of the cyclic oxides is calculated according to ¹HnmR of the crude products. ⁴ It refers to the molar percentage of cyclic carbonate in its mixed product with polymer. This is calculated according to ¹HnmR of the mixed product. ⁵ It refers to the molar percentage of polycarbonate linkage in polymer's backbone, and it is calculated according to ¹HnmR of the product. ⁶Mₙ refers to number average molecular weight, and it is determined by gel permeation chromatography (GPC). ⁷PDI refers to polydispersity index, and it is determined by GPC. | | | | | | | | | | |

From the above examples shows that Zn-Co DMC catalysts prepared by the method of the disclosure show higher catalytic activity (1 to 2 hours in reaction time, epoxide conversion rate greater than 50%) in a high feeding proportion of initiator (1/50 to 1/90 of epoxide in molar ratio), and the mass ratio of catalyst to epoxide feelingless than 1/2000, at a higher reaction temperature (90 to 100°C), the synthesized polymer contained a higher proportion of polycarbonate linkages (molar percentage >50%). The higher proportion of polycarbonate linkages in such polyols can endure polyurethane materials higher Young's modulus, better water resistance, weather resistance and other properties when used as raw materials to synthesize polyurethane materials.

The ¹HnmR hydrogen spectrum of the product of Example 17 is shown in FIG. 4, and the GPC curve of the polymer product of Example 17 is shown in FIG. 5.

### Comparative Example 1

According to Chinese patent CN1299300A released an acid treatment method of double metal cyanide complex catalyst preparation for catalyst number D1. Compared with the catalyst prepared in the Example 1 of the present disclosure, the reaction conditions are the same with that in the Example 9. The polyether polyol prepared by catalyst D1 does not comprise polycarbonate linkages in the polymer's backbone, no fixation and utilization effect of carbon dioxide, and no catalyst selectivity compared with the catalyst of the present disclosure.

The method is essentially different from the disclosure. Firstly, the timing of the addition of the modified acid is different. The DMC catalyst in Chinese patent CN1299300A is already synthesized in advance, and the protic acid is added before the polymerization reaction, which is equivalent to an improvement of the polymerization process. However, in the present disclosure the mixed acid must be added in the synthesis process of DMC catalyst, and in addition to protic acid, the aprotic acid must also be added at the same time (i.e., the organic acid proposed in the disclosure), so as to achieve better catalytic activity and selectivity of the disclosure through the synergistic effect of mixed acid. Secondly, only protic acid is added in the patent, while the mixed acid is added in the present disclosure (including protic acid and inorganic aprotic acid), which has different types of acids with different effects.

### Comparative Example 2

In accordance with the patent WO2011160797 released an improved method for DMC catalysts and prepared catalyst number D5. Compared with the catalyst prepared in the Example 5 of the present disclosure, the reaction conditions are the same with that in Example 13. The polyether polyol prepared by catalyst D5 comprises 40% of ring products. The polymeric main chains comprise 30% polycarbonate linkages and 70% polyether linkages. Compared with the results of Example 13 of the disclosure, the selectivity of the polymer product is lower than that of the disclosure, and the selectivity of carbon dioxide fixation is much lower.

The method is fundamentally different from the disclosure. The timing of the addition of modified acid is different. The DMC catalyst of patent WO2011160797 has been synthesized in advance, and the addition of protic acid is prior to the polymerization reaction, which is equivalent to an improvement of the polymerization process. However, in the present disclosure the mixed acid must be added in the synthesis process of DMC catalyst, and in addition to protic acid, the aprotic acid must also be added at the same time (i.e., the organic acid proposed in the disclosure), so as to achieve better catalytic activity and selectivity of the disclosure.

### Comparative Example 3

The same method as in Example 1 was used to prepare the Zn-Co DMC catalyst. The only difference was that only protic acids (in the case of diluted sulfuric acid) were used for modification without the addition of organic acids.

Potassium hexacyanocobaltate (III) and zinc chloride (molar ratio 1:5) is weighed, and added to the blend solvent of water and methanol with the equivalent weight to metal salts. After being stable and uniform, diluted sulfuric acid (pH 1, molar ratio of metal salt to acid 1:4) is added, stirred at 10°C, and no precipitation is generated. It can be clearly proved that under the condition of adding only inorganic acids without any organic acids, the system will not produce co-precipitation, that is, no catalyst will be generated.

### Comparative Example 4

The same method as in Example 1 was used to prepare the Zn-Co DMC catalyst. The only difference was that only organic acids (succinic acid as an example) were used for modification without the addition of inorganic protic acids.

Potassium hexacyanocobaltate (III) and zinc chloride (molar ratio 1:5)is weighed and added to the blend solvent of water and methanol with the equivalent weight to metal salts. After being stable and uniform, succinic acid (molar ratio of metal salt to acid is 1:4) was added and stirred at 10°C for 2 hours, and precipitation continued to form. The turbidity liquid was drained and dried to obtain a filter cake. The filter cake was pulped and washed with water-based solvent. After stirring at 80°C for 12 hours, the filter cake was extracted and dried to obtain the filter cake. The process was repeated several times until the pH of the liquid phase of the system was 6 to 7. The solid product was further dried under the vacuum condition of 80°C to obtain the final catalyst. Before use, the catalyst was processed into powder particles by mechanical grinding under the condition of anhydrous drying.

When the catalyst was used to catalyze the polymerization under the reaction conditions of Example 9, it showed no activity. It is indicated that the system could generate precipitated metal coordination compounds when only organic acids were added, but without the synergistic modification of organic acids, the precipitate obtained above had no catalytic activity for the polymerization reaction.

The Comparative Example 3 and 4 indicate that when preparing the DMC catalyst of the disclosure, it is necessary to use organic acids and inorganic acids at the same time to modify and prepare the catalyst. Both kinds of acids are indispensable, and DMC catalyst for effective catalytic polymerization can not be obtained if one kind of acid is used for modification alone.

### Comparative Example 5

The same method as Example 1 was used to prepare the Zn-Cobalt DMC catalyst. The only difference being that the diluted hydrochloric acid pH of 6 was used.

### Modified with the mixture of diluted hydrochloric acid and glutaric acid

Sodium hexacyanocobaltate (III) and zinc bromide (molar ratio 1:4) were weighed and added into the blend solvent of the water and tert-butanol with the mass 5 times higher than that of metal salt, and stirred. After being stable and uniform, the mixed acid of diluted hydrochloric acid (pH=6) and glutaric acid (molar ratio of metal salt to acid is 4:1, molar ratio of diluted hydrochloric acid to glutaric acid is 5: 1) are added. After stirring at 100°C for 3 hours, precipitation continues to form. The turbid liquid was drained and dried to obtain a filter cake. The filter cake was pulped and washed with water-based solvent again. After stirring at 60°C for 6 hours, the filter cake was extracted and dried to obtain the filter cake. The process was repeated several times until the pH of the liquid phase of the system was 6 to 7. The solid product was further dried under the vacuum condition of 80°C to obtain the final catalyst. Before use, the catalyst was processed into powder particles by mechanical grinding under the condition of anhydrous drying.

The obtained catalyst was used to catalyze the polymerization reaction under the reaction conditions of Example 10, and the measured conversion rate was only about 5%. The polymer product was characterized by ¹HnmR to contain85%polyether structure and 15% polycarbonate structure. It is proved that the catalyst has some activity, but the activity and selectivity are poor. The activity was much lower than that of the catalyst in Example 10, where the conversion was 90%. The polycarbonate structure was 91%, and the polyether structure was 9%. The results showed that the acid could not reduce the crystal structure of the catalyst when the pH value of inorganic protic acid was >5, that is, the acid was weak, and the activity and selectivity of the catalyst were reduced.

### Comparative Example 6

The same method as in Example 2 was used to prepare the Zn-Co DMC catalyst. The only difference was that the diluted hydrochloric acid with a pH of -1 was used.

### Modified with the mixture of diluted hydrochloric acid and glutaric acid (molar ratio 5:1)

No precipitate and catalyst were achieved. The results show that when the pH value of the added inorganic protic acid is less than 0, the acid is too strong. It will destroy the coordination and bridging of the metal atoms, and can not generate the catalyst normally.

### Comparative Example 7

The same method as in Example 2 for preparing the Zn-Co DMC catalyst was used. The only difference was that the zinc salt in this method is substituted with a metal salt (cadmium bromide) as a third metal (in the case of cadmium) besides zinc and cobalt, that is, the zinc is substituted with a third metal.

### Modified with the mixture of diluted hydrochloric acid and glutaric acid.

Sodium hexacyanocobaltate (III) and cadmium bromide (molar ratio 1:4) were weighed and added into the blend solvent of the water and tert-butanol with the mass 5 times higher than that of metal salt, and stirred. After being stable and uniform, the mixed acid of diluted hydrochloric acid (pH=2) and glutaric acid (molar ratio of metal salt to acid is 4:1, molar ratio of diluted hydrochloric acid to glutaric acid is 5: 1) are added. After stirring at 100°C for 3 hours, precipitation continues to form. The turbid liquid was drained and dried to obtain a filter cake. The filter cake was pulped and washed with water-based solvent again. After stirring at 60°C for 6 hours, the filter cake was extracted and dried to obtain the filter cake. The process was repeated several times until the pH of the liquid phase of the system was 6 to 7. The solid product was further dried under the vacuum condition of 80°C to obtain the final catalyst. Before use, the catalyst was processed into powder particles by mechanical grinding under the condition of anhydrous drying.

When the catalyst was used for the polymerization under the reaction conditions of Example 10, it showed no activity, indicating that the precipitate obtained by replacing metal zinc with other metals had no catalytic activity for the polymerization.

### Comparative Example 8

The preparation of the Zn-Co DMC catalyst is done in the same way as in Example 2, with the only difference being that the cobalt salt in this method is replaced by a metal salt (sodium tetracyanonickelate) as a third metal (in the case of metal nickel) besides zinc and cobalt, that is, the cobalt metal is replaced by a third metal.

### Modified with the mixture of diluted hydrochloric acid and glutaric acid

Sodium tetracyanonickelate and zinc bromide (molar ratio 1:4) were weighed and added into the blend solvent of the water and tert-butanol with the mass 5 times higher than that of metal salt, and stirred. After being stable and uniform, the mixed acid of diluted hydrochloric acid (pH=2) and glutaric acid (molar ratio of metal salt to acid is 4:1, molar ratio of diluted hydrochloric acid to glutaric acid is 5: 1) are added. After stirring at 100°C for 3 hours, precipitation continues to form. The turbid liquid was drained and dried to obtain a filter cake. The filter cake was pulped and washed with water-based solvent again. After stirring at 60°C for 6 hours, the filter cake was extracted and dried to obtain the filter cake. The process was repeated several times until the pH of the liquid phase of the system was 6 to 7. The solid product was further dried under the vacuum condition of 80°C to obtain the final catalyst. Before use, the catalyst was processed into powder particles by mechanical grinding under the condition of anhydrous drying.

When the catalyst was used for the polymerization under the reaction conditions of Example 10, it showed no activity, indicating that the precipitate obtained by replacing cobalt metal with other metals had no catalytic activity for the polymerization reaction.

### Comparative Example 9

The preparation method of the Zn-Co DMC catalyst is the same as that used in Example 2. The only difference is that in addition to the zinc and cobalt, a metal salt (ferric chloride) as a third metal (in the case of metal ferrum) is added for synthesis to prepare the catalyst comprising the three metal elements.

### Modified with the mixture of diluted hydrochloric acid and glutaric acid.

Sodium hexacyanocobaltate (III), zinc bromide and ferric chloride (molar ratio 1:4:1) were weighed and added into the blend solvent of the water and tert-butanol with the mass 5 times higher than that of metal salt, and stirred. After being stable and uniform, the mixed acids of diluted hydrochloric acid (pH=2) and glutaric acid (molar ratio of metal salt to acid is 4:1, molar ratio of diluted hydrochloric acid to glutaric acid is 5: 1) are added. After stirring at 100°C for 3 hours, precipitation continues to form. The turbid liquid was drained and dried to obtain a filter cake. The filter cake was pulped and washed with water-based solvent again. After stirring at 60°C for 6 hours, the filter cake was extracted and dried to obtain the filter cake. The process was repeated several times until the pH of the liquid phase of the system was 6 to 7. The solid product was further dried under the vacuum condition of 80°C to obtain the final catalyst. Before use, the catalyst was processed into powder particles by mechanical grinding under the condition of anhydrous drying.

The obtained catalyst was catalyzed for the polymerization reaction under the reaction conditions of Example 10, and the measured conversion was only about 3%. The polymer product was characterized by 1HNMR to contain 90% polyether structure and only 10%polycarbonate structure. It is proved that the catalyst has some activity, but the activity and selectivity are poor. The activity was much lower than that of the catalyst in Example 10, where the conversion was 90%. The polycarbonate structure was 91%, and the polyether structure was 9%. The results show that the activity and selectivity of the catalyst are greatly reduced when the third metal is added, although the catalyst still retains some activity.

### Comparative Example 10

The preparation of the Zn-Co DMC catalyst is the same as in Example 2, with the only difference being that diluted hydrochloric acid is replaced by other kinds of inorganic protic acids (in case of hydrobromic acid) for the catalyst preparation.

### Modified with the mixture of hydrobromic acid and glutaric acid.

Sodium hexacyanocobaltate (III) and zinc bromide (molar ratio 1:4) were weighed and added into the blend solvent of the water and tert-butanol with the mass 5 times higher than that of metal salt, and stirred. After being stable and uniform, hydrobromic acid (pH=2) and glutaric acid (molar ratio of metal salt to acid is 4: 1, molar ratio of hydrobromic acid to glutaric acid is 5:1) are added. After stirring at 100°C for 3 hours, precipitation continues to form. The turbid liquid was drained and dried to obtain a filter cake. The filter cake was pulped and washed with water-based solvent again. After stirring at 60°C for 6 hours, the filter cake was extracted and dried to obtain the filter cake. The process was repeated several times until the pH of the liquid phase of the system was 6 to 7. The solid product was further dried under the vacuum condition of 80°C to obtain the final catalyst. Before use, the catalyst was processed into powder particles by mechanical grinding under the condition of anhydrous drying.

The obtained catalyst was used to catalyze the polymerization reaction under the reaction conditions of Example 10, and the measured conversion was only about 5%. The products were mainly cyclic carbonates with small molecules, and almost no polymer products were achieved according to the 1HNMR characterization. The results showed that the catalytic activity of the catalyst was very low and there was almost no polymer selectivity when the diluted hydrochloric acid was replaced by other inorganic protic acids.

### Comparative Example 11

The preparation of the Zn-Co DMC catalyst is the same as in Example 2, with the only difference being that glutaric acid is replaced by other kinds of organic acids (in case of adipic acid) to prepare the catalyst.

### Modified with the mixture of diluted hydrochloric acid and adipic acid.

Sodium hexacyanocobaltate (III) and zinc bromide (molar ratio 1:4) were weighed and added into a blend solvent of the water and tert-butanol with the mass 5 times higher than that of metal salt, and stirred. After being stable and uniform, diluted hydrochloric acid (pH=2) and the mixed acid of adipic acid (molar ratio of metal salt to acid is 4: 1, molar ratio of diluted hydrochloric acid to adipic acid is 5: 1) are added. After stirring at 100°C for 3 hours, precipitation continues to form. The turbid liquid was drained and dried to obtain a filter cake. The filter cake was pulped and washed with water-based solvent again. After stirring at 60°C for 6 hours, the filter cake was extracted and dried to obtain the filter cake. The process was repeated several times until the pH of the liquid phase of the system was 6 to 7. The solid product was further dried under the vacuum condition of 80°C to obtain the final catalyst. Before use, the catalyst was processed into powder particles by mechanical grinding under the condition of anhydrous drying.

The obtained catalyst was used to catalyze the polymerization reaction under the reaction conditions of Example 10, and the measured conversion was only about 5%. The products were mainly cyclic carbonates with small molecules, and almost no polymer products were achieved according to the 1HNMR characterization. The results showed that the catalytic activity of the catalyst was very low and there was almost no polymer selectivity when the diluted hydrochloric acid was replaced by other inorganic protic acids.

### Comparative Example 12

The same method as in Example 2 was used to prepare Zn-Co DMC catalysts. The only difference was that the molar ratio of inorganic protic acids to organic acids was 11:1.

### Modified with the mixture of hydrobromic acid and glutaric acid

Sodium hexacyanocobaltate (III) and zinc bromide (molar ratio 1:4) were weighed and added into the blend solvent of the water and tert-butanol with the mass 5 times higher than that of metal salt, and stirred. After being stable and uniform, the mixed acid of diluted hydrochloric acid (pH=2) and glutaric acid (molar ratio of metal salt to acid is 4:1, molar ratio of diluted hydrochloric acid to glutaric acid is 11:1) are added. After stirring at 100°C for 3 hours, the precipitate can not be obtained, and the catalyst can not be synthesized normally. The results show that when the molar ratio of inorganic protic acid to organic acid is greater than 10:1, the coordination and bridging of metals will be destroyed and the catalyst cannot be synthesized normally.

### Comparative Example 13

The same method as in Example 2 was used to prepare Zn-Co DMC catalysts. The only difference was that the molar ratio of inorganic protic acids to organic acids was 1:11.

### Modified with the mixture of hydrobromic acid and glutaric acid.

Sodium hexacyanocobaltate (III) and zinc bromide (molar ratio 1:4) were weighed and added into the blend solvent of the water and tert-butanol with the mass 5 times higher than that of metal salt, and stirred. After being stable and uniform, the mixed acid of diluted hydrochloric acid (pH=2) and glutaric acid (molar ratio of metal salt to acid is 4:1, diluted hydrochloric acid to glutaric acid is 1:11) are added. After stirring at 100°Cfor 3 hours, precipitation continues to form. The turbid liquid was drained and dried to obtain a filter cake. The filter cake was pulped and washed with water-based solvent again. After stirring at 60°C for 6 hours, the filter cake was extracted and dried to obtain the filter cake. The process was repeated several times until the pH of the liquid phase of the system was 6 to 7. The solid product was further dried under the vacuum condition of 80°C to obtain the final catalyst. Before use, the catalyst was processed into powder particles by mechanical grinding under the condition of anhydrous drying.

It is indicated that the catalyst had no activity when the molar ratio of inorganic protic acid and organic acid was less than 1:10.

### Comparative Example 14

A: Preparation of metal catalysts according to the patented method: The mixture of ethylene glycol of 41 equivalent weight and water of 4 equivalent weight is added into the tank with agitator at room temperature and pressure. The 1.5 equivalent weight of potassium hexacyanocobaltate (III) and zinc chloride (molar ratio of 1:5) is added to the mixture, stirred and dissolved. 3.8 equivalent weight of diluted sulfuric acid and succinic acid mixture (molar ratio of 1:5) is added, stirred and mixed. Then 2.4 equivalent weight of tetrabutyl titanate is added and stirred for 30 minutes to dissolve, and thus obtained catalyst D14-A. Compared with the catalyst prepared in the Example 1 of the present disclosure, the reaction condition is the same as that in the Example 9, while the catalyst D14-A has no catalytic activity for the copolymerization of carbon dioxide with propylene oxide.
B: According to the method preparation of metal catalysts released in A patent: The only difference is that the replace of tetrabutyl titanate with tetrabutyl zirconate replace, and the catalyst preparation for D14-B. Compared with the catalyst in the Example 1 of the present disclosure, the reaction condition is the same as that in the Example 9, while the catalyst D14-B has no catalytic activity for the copolymerization of carbon dioxide with propylene oxide.
C: According to the method preparation of metal catalysts released in A patent: The only difference is that the replace of tetrabutyl titanate with tetrabutyl hafniate, and the catalyst preparation for D14-C. Compared with the catalyst prepared in the Example 1 of the present disclosure, the reaction condition is the same as that in the Example 9, while the catalyst D14-C has no catalytic activity for the copolymerization of carbon dioxide with propylene oxide.
D: According to the method preparation of metal catalysts released in A patent: The only difference is that the replace of potassium hexacyanocobaltate (III) with cobalt chloride, and the catalyst preparation for D14-D. Compared with the catalyst prepared in the Example 1 of the present disclosure, the reaction condition is the same as that in the Example 9, while the catalyst D14-D has no catalytic activity for the copolymerization of carbon dioxide with propylene oxide.

In summary, all the following conditions must be strictly met in order to produce a catalyst with the technical effect of the present disclosure: The catalyst is obtained by the reaction of water-soluble metal salt of zinc and cobalt in water-soluble solvent, and the water-soluble metal salt of cobalt is cobalt cyanide salt. The catalyst is synthesized by mixed acid modification, and the mixed acid comprises at least one organic acid and at least one water-soluble inorganic acid, wherein: the water-soluble inorganic acid is selected from diluted sulfuric acid and diluted hydrochloric acid, with pH value being range of 0 to 5. The organic acids are selected any one or any variety from succinic acid, glutaric acid, phthalic acid, iminodiacetic acid, pyromellitic acid, butaneteracarboxylic acid. The water-soluble inorganic acid and organic acid is in a molar ratio of 1: 10 to 10:1.

Technical effect of the present disclosure refers to: Under the common industrial conditions with the mass ratio of catalyst and epoxide monomer less than 1/1000, the catalyst shows higher catalytic activity (1 to 2 hours in reaction time, monomer conversion rate greater than 50%) with a higher amount ratio of initiator feeding (1/50 to 1/90 of the epoxide monomer feeding in molar) and a higher reaction temperature (90 to 100°C), and the synthetic polymer structure comprises a higher proportion of polycarbonate structure (molar percentage > 50%).

The above is only the preferred implementation mode of the present disclosure. It should be noted that for ordinary technicians in the technical field, without deviating from the principles of the disclosure, a number of improvements and refinements may be made, which shall also be considered as the scope of protection of the present disclosure.

## Claims

1. A mixed-acid modified zinc-cobalt double metal cyanide catalyst, **characterized in that** the catalyst comprises only the two metal elements of zinc and cobalt, besides impurities;
the catalyst is obtained by reacting water-soluble metal salts of zinc and cobalt in water-soluble solvent, and the water-soluble metal salt of cobalt is cobalt cyanide salt;
the catalyst is modified by mixed acid during synthesis, the mixed acid comprising at least one organic acid and at least one water-soluble inorganic acid, wherein:
the water-soluble inorganic acid is selected from the group consisting of diluted sulfuric acid and diluted hydrochloric acid, with a pH value being in the range of 0 to 5;
the organic acid is one or more selected from the group consisting of succinic acid, glutaric acid, phthalic acid, iminodiacetic acid, pyromellitic acid, and 1,2,3,4-butanetetracarboxylic acid; the water-soluble inorganic acid and organic acid being in a molar ratio of 1:10 to 10:1;
the step of reacting water-soluble metal salts of zinc and cobalt in water-soluble solvent and the step of modify the catalyst by mixed acid during synthesis are carried out at one or more temperatures ranging from 10 °C to 100 °C;
the ratio between the total molar of the water-soluble zinc salt and the water-soluble cobalt salt and the total molar of the mixed acid is 1:10 to 10:1.

2. The catalyst according to claim 1, **characterized in that** the molar ratio of zinc and cobalt in the catalyst is 1:5 to 5:1, preferably 1:4 to 4:1, more preferably 1:3 to 3:1, more preferably 1:2 to 2:1; preferably the pH value of the water-soluble inorganic acid is in the range of 0 to 4, more preferably 1 to 3; more preferably 1 to 2.

3. The catalyst according to any one of claims 1-2, **characterized in that** the water-soluble inorganic acid and organic acid is in a molar ratio of 1:8 to 8:1, preferably 1:5 to 5:1, more preferably 1:3 to 3:1.

4. The catalyst according to any one of claims 1-3, **characterized in that** a microscopic morphology of the catalyst is irregular polyhedral particles, and the particle size is in the range of 1 to 100 nm; optionally, the amorphous non-crystalline ratio of the catalyst is greater than 90%, which is **characterized by** X-ray diffraction (XRD).

5. A method of preparing a catalyst of any one of claims 1-4, **characterized by** comprising the following steps:
i) reacting at least one water-soluble zinc salt and at least one water-soluble cobalt salt in an aqueous solvent in the presence of the mixed acid; wherein the water-soluble cobalt salt is a cobalt cyanide salt; the mixed acid comprises at least one organic acid and at least one water-soluble inorganic acid, wherein:
the water-soluble inorganic acid is selected from the group consisting of diluted sulfuric acid and diluted hydrochloric acid, with pH value being in the range of 0 to 5; preferably 0 to 4; more preferably 1 to 3; more preferably 1 to 2;
the organic acid is one or more selected from the group consisting of succinic acid, glutaric acid, phthalic acid, iminodiacetic acid, pyromellitic acid, 1,2,3,4-butanetetracarboxylic acid; the water-soluble inorganic acid and organic acid is in a molar ratio of 1: 10 to 10: 1;
ii) obtaining the mixed acid modified Zn-Co double metal cyanide catalyst by separating, washing and drying the catalyst obtained in step i) for several times until the pH of the detergent in the range of 6 to 7;
the steps i) and ii) are carried out at one or more temperatures ranging from 10 °C to 100 °C;
the ratio between the total moles of the water-soluble zinc salt and the water-soluble cobalt salt and the total moles of mixed acid is 1:10 to 10:1.

6. The method according to claim 5, **characterized in that** the water-soluble zinc salts in step i) are one or more selected from the group consisting of zinc chloride, zinc bromide, zinc iodide, zinc sulfate and zinc acetate; optionally, the water-soluble cobalt salts in step i) are selected from the group consisting of sodium hexacyanocobaltate (III) and potassium hexacyanocobaltate (III); optionally, the steps i) and ii) are carried out at one ore more temperatures ranging from 10 to 80 °C, more preferably 20 to 60 °C, and more preferably 20 to 40 °C.

7. The method according to claim 5, **characterized in that** the water-soluble zinc salt and water-soluble cobalt salt in step i) is in a molar ratio of 1:5 to 5:1, preferably 1:4 to 4:1, more preferably 1:3 to 3:1, and more preferably 1:2 to 2:1.

8. The method according to claim 5, **characterized in that** ratio between the total mass of water-soluble zinc salt and water-soluble cobalt salt and the mass of water-based solvent is 1:1 to 1 :200, preferably 1:1 to 1:100, more preferably 1:1 to 1:50, more preferably 1:1 to 1:20, more preferably 1:1 to 1:10, and more preferably 1:1 to 1:5.

9. The method according to claim 5, **characterized in that** a ratio between the total moles of the water-soluble zinc salt and the water-soluble cobalt salt and the total moles of mixed acid is 1:5 to 5:1, more preferably 1:4 to 4:1, more preferably 1:3 to 3:1, and more preferably 1:2 to 2:1.

10. The method according to claim 6, **characterized in that** the water-soluble inorganic acid and the organic acid is in a molar ratio of 1:8 to 8:1, preferably 1:5 to 5:1, more preferably 1:3 to 3:1; optionally, the aqueous solvent is one or more selected from the group consisting of water, methanol, ethanol, propanol and its isomers, butanol and its isomers, amyl alcohol and its isomers, hexanol and its isomers, heptanol and its isomers.

11. Use of a catalyst according to claims 1-4 or prepared according to claims 5-10 for the copolymerization of an epoxide with carbon dioxide.

## Patentansprüche

1. Durch eine Mischsäure modifizierter Zink-Kobalt-Doppelmetallcyanid-Katalysator, **dadurch gekennzeichnet, dass** der Katalysator neben Verunreinigungen nur die beiden Metallelemente Zink und Kobalt enthält;
wobei der Katalysator durch Umsetzung von wasserlöslichen Metallsalzen von Zink und Kobalt in einem wasserlöslichen Lösungsmittel erhalten wird und das wasserlösliche Metallsalz von Kobalt Kobaltcyanidsalz ist;
wobei der Katalysator während der Synthese durch eine Mischsäure modifiziert wird, wobei die Mischsäure mindestens eine organische Säure und mindestens eine wasserlösliche anorganische Säure umfasst, wobei:
wobei die wasserlösliche anorganische Säure ausgewählt ist aus der Gruppe bestehend aus verdünnter Schwefelsäure und verdünnter Salzsäure, wobei der pH-Wert im Bereich von 0 bis 5 liegt;
wobei die organische Säure eine oder mehrere ausgewählt ist aus der Gruppe bestehend aus Bernsteinsäure, Glutarsäure, Phthalsäure, Iminodiessigsäure, Pyromellitsäure und 1,2,3,4-Butantetracarbonsäure; wobei die wasserlösliche anorganische Säure und die organische Säure in einem Molverhältnis von 1:10 bis 10:1 vorliegen;
wobei der Schritt der Umsetzung von wasserlöslichen Metallsalzen von Zink und Kobalt in einem wasserlöslichen Lösungsmittel und der Schritt der Modifizierung des Katalysators durch eine Mischsäure während der Synthese bei einer oder mehreren Temperaturen im Bereich von 10 °C bis 100 °C durchgeführt werden; und
wobei das Verhältnis zwischen der Gesamtmolzahl des wasserlöslichen Zinksalzes und des wasserlöslichen Kobaltsalzes und der Gesamtmolzahl der Mischsäure 1:10 bis 10:1 beträgt.

2. Katalysator nach Anspruch 1, **dadurch gekennzeichnet, dass** das Molverhältnis von Zink und Kobalt im Katalysator 1:5 bis 5:1, vorzugsweise 1:4 bis 4:1, besonders bevorzugt 1:3 bis 3:1, besonders bevorzugt 1:2 bis 2:1 beträgt; wobei vorzugsweise der pH-Wert der wasserlöslichen anorganischen Säure im Bereich von 0 bis 4, besonders bevorzugt im Bereich von 1 bis 3; bevorzugter im Bereich von 1 bis 2 liegt.

3. Katalysator nach einem der Ansprüche 1 bis 2, **dadurch gekennzeichnet, dass** die wasserlösliche anorganische Säure und die organische Säure in einem Molverhältnis von 1:8 bis 8:1, vorzugsweise 1:5 bis 5:1, besonders bevorzugt 1:3 bis 3:1 vorliegen.

4. Katalysator nach einem der Ansprüche 1 bis 3, **dadurch gekennzeichnet, dass** eine mikroskopische Morphologie des Katalysators unregelmäßige polyedrische Partikeln ist und die Partikelgröße im Bereich von 1 bis 100 nm liegt; wobei gegebenenfalls der amorphe nicht-kristalline Anteil des Katalysators größer als 90 % ist, was durch Röntgenbeugung (XRD) gekennzeichnet wird.

5. Verfahren zum Herstellen eines Katalysators nach einem der Ansprüche 1 bis 4, **dadurch gekennzeichnet, dass** es die folgenden Schritte umfasst:
i) Umsetzen mindestens eines wasserlöslichen Zinksalzes und mindestens eines wasserlöslichen Kobaltsalzes in einem wässrigen Lösungsmittel in Gegenwart der Mischsäure; wobei das wasserlösliche Kobaltsalz ein Kobaltcyanidsalz ist und die Mischsäure mindestens eine organische Säure und mindestens eine wasserlösliche anorganische Säure umfasst,
wobei die wasserlösliche anorganische Säure aus der Gruppe bestehend aus verdünnter Schwefelsäure und verdünnter Salzsäure ausgewählt ist, wobei der pH-Wert im Bereich von 0 bis 5, vorzugsweise im Bereich von 0 bis 4, noch bevorzugter im Bereich von 1 bis 3 und noch bevorzugter im Bereich von 1 bis 2 liegt;
wobei die organische Säure eine oder mehrere ausgewählt ist aus der Gruppe bestehend aus Bernsteinsäure, Glutarsäure, Phthalsäure, Iminodiessigsäure, Pyromellitsäure und 1,2,3,4-Butantetracarbonsäure; wobei die wasserlösliche anorganische Säure und die organische Säure in einem Molverhältnis von 1:10 bis 10:1 vorliegen;
ii) Gewinnen des durch eine Mischsäure modifizierter Zn-Co-Doppelmetallcyanid-Katalysator durch mehrmaliges Abtrennen, Waschen und Trocknen des in Schritt i) erhaltenen Katalysators, bis der pH-Wert des Waschmittels im Bereich von 6 bis 7 liegt;
wobei die Schritte i) und ii) bei einer oder mehreren Temperaturen im Bereich von 10 °C bis 100 °C durchgeführt werden; und
wobei das Verhältnis zwischen der Gesamtmolzahl des wasserlöslichen Zinksalzes und des wasserlöslichen Kobaltsalzes und der Gesamtmolzahl der Mischsäure 1:10 bis 10:1 beträgt.

6. Verfahren nach Anspruch 5, **dadurch gekennzeichnet, dass** die wasserlöslichen Zinksalze in Schritt i) eines oder mehrere sind, das/die aus der Gruppe bestehend aus Zinkchlorid, Zinkbromid, Zinkjodid, Zinksulfat und Zinkacetat ausgewählt ist/sind; wobei gegebenenfalls die wasserlöslichen Kobaltsalze in Schritt i) aus der Gruppe bestehend aus Natriumhexacyanocobaltat (iii) und Kaliumhexacyanocobaltat (III) ausgewählt sind; wobei gegebenenfalls die Schritte i) und ii) bei einer oder mehreren Temperaturen im Bereich von 10 bis 80 °C, vorzugsweise im Bereich von 20 bis 60 °C und noch bevorzugter im Bereich von 20 bis 40 °C durchgeführt.

7. Verfahren nach Anspruch 5, **dadurch gekennzeichnet, dass** das wasserlösliche Zinksalz und das wasserlösliche Kobaltsalz in Schritt i) in einem Molverhältnis von 1:5 bis 5:1, vorzugsweise 1:4 bis 4:1, noch bevorzugter 1:3 bis 3:1 und noch bevorzugter 1:2 bis 2:1 vorliegen.

8. Verfahren nach Anspruch 5, **dadurch gekennzeichnet, dass** das Verhältnis zwischen der Gesamtmasse des wasserlöslichen Zinksalzes und des wasserlöslichen Kobaltsalzes und der Masse des Lösungsmittels auf Wasserbasis 1:1 bis 1:200, vorzugsweise 1:1 bis 1:100, noch bevorzugter 1:1 bis 1:50, noch bevorzugter 1:1 bis 1:20, noch bevorzugter 1:1 bis 1:10 und noch bevorzugter 1:1 bis 1:5 beträgt.

9. Verfahren nach Anspruch 5, **dadurch gekennzeichnet, dass** das Verhältnis zwischen der Gesamtmolzahl des wasserlöslichen Zinksalzes und des wasserlöslichen Kobaltsalzes und der Gesamtmolzahl der Mischsäure 1:5 bis 5:1, bevorzugter 1:4 bis 4:1, bevorzugter 1:3 bis 3:1 und noch bevorzugter 1:2 bis 2:1 beträgt.

10. Katalysator nach Anspruch 6, **dadurch gekennzeichnet, dass** die wasserlösliche anorganische Säure und die organische Säure in einem Molverhältnis von 1:8 bis 8:1, vorzugsweise 1:5 bis 5:1, besonders bevorzugt 1:3 bis 3:1 vorliegen; wobei gegebenenfalls das wässrige Lösungsmittel eines oder mehrere ist, das/die aus der Gruppe bestehend aus Wasser, Methanol, Ethanol, Propanol und seinen Isomeren, Butanol und seinen Isomeren, Amylalkohol und seinen Isomeren, Hexanol und seinen Isomeren, Heptanol und seinen Isomeren ausgewählt ist/sind.

11. Verwendung eines Katalysators nach einem der Ansprüche 1 bis 4 oder hergestellt nach einem der Ansprüche 5 bis 10 für die Copolymerisation eines Epoxids mit Kohlendioxid.

## Revendications

1. Catalyseur de cyanure bimétallique de zinc-cobalt modifié par un acide mixte, **caractérisé en ce qu'**en dehors d'impuretés, le catalyseur ne comprend que les deux éléments métalliques : le zinc et le cobalt ;
le catalyseur est obtenu en faisant réagir des sels métalliques hydrosolubles de zinc et de cobalt dans un solvant hydrosoluble, et le sel métallique hydrosoluble de cobalt est un sel de cyanure de cobalt ;
le catalyseur est modifié par un acide mixte au cours de la synthèse, l'acide mixte comprenant au moins un acide organique et au moins un acide inorganique hydrosoluble, dans lesquels :
l'acide inorganique hydrosoluble est choisi dans le groupe constitué de l'acide sulfurique dilué et de l'acide chlorhydrique dilué, avec une valeur du pH comprise entre 0 et 5 ;
l'acide organique est un ou plusieurs acides choisis dans le groupe constitué de l'acide succinique, l'acide glutarique, l'acide phtalique, l'acide iminodiacétique, l'acide pyromellitique et l'acide 1,2,3,4-butanetetracarboxylique ; l'acide inorganique hydrosoluble et l'acide organique étant dans un rapport molaire de 1:10 à 10:1 ;
l'étape consistant à faire réagir des sels métalliques hydrosolubles de zinc et de cobalt dans un solvant hydrosoluble et l'étape consistant à modifier le catalyseur par un acide mixte au cours de la synthèse sont effectuées à une ou plusieurs températures comprises entre 10 °C et 100 °C ;
le rapport entre le nombre total de moles du sel hydrosoluble de zinc et du sel hydrosoluble de cobalt et le nombre total de moles de l'acide mixte est de 1:10 à 10:1.

2. Catalyseur selon la revendication 1, **caractérisé en ce que** le rapport molaire du zinc par rapport au cobalt dans le catalyseur est de 1:5 à 5:1, de préférence de 1:4 à 4:1, de préférence encore de 1:3 à 3:1, de préférence encore de 1:2 à 2:1 ; de préférence, la valeur du pH de l'acide inorganique hydrosoluble est comprise entre 0 et 4, de préférence encore entre 1 et 3 ; de préférence encore entre 1 et 2.

3. Catalyseur selon l'une des revendications 1 à 2, **caractérisé en ce que** l'acide inorganique hydrosoluble et l'acide organique sont dans un rapport molaire de 1:8 à 8:1, de préférence de 1:5 à 5:1, de préférence encore de 1:3 à 3:1.

4. Catalyseur selon l'une des revendications 1 à 3, **caractérisé en ce que** la morphologie microscopique du catalyseur est constituée de particules polyédriques irrégulières et que la taille des particules est comprise entre 1 et 100 nm ; facultativement, le ratio amorphe non-cristallin du catalyseur est supérieur à 90 %, ce qui est **caractérisé par** diffraction des rayons X.

5. Procédé de préparation d'un catalyseur selon l'une des revendications 1 à 4, **caractérisé par** les étapes suivantes :
i) faire réagir au moins un sel hydrosoluble de zinc et au moins un sel hydrosoluble de cobalt dans un solvant aqueux en présence de l'acide mixte ; le sel hydrosoluble de cobalt est un sel de cyanure de cobalt ; l'acide mixte comprend au moins un acide organique et au moins un acide inorganique hydrosoluble, dans lesquels :
l'acide inorganique hydrosoluble est choisi dans le groupe constitué de l'acide sulfurique dilué et l'acide chlorhydrique dilué, avec une valeur du pH comprise entre 0 et 5 ; de préférence entre 0 et 4 ; de préférence encore entre 1 et 3 ; de préférence encore entre 1 et 2 ;
l'acide organique est un ou plusieurs acides choisis dans le groupe constitué de l'acide succinique, l'acide glutarique, l'acide phtalique, l'acide iminodiacétique, l'acide pyromellitique, l'acide 1,2,3,4-butanetetracarboxylique ; l'acide inorganique hydrosoluble et l'acide organique sont dans un rapport molaire de 1:10 à 10:1 ;
ii) obtenir le catalyseur de cyanure bimétallique de zinc-cobalt modifié par un acide mixte, en séparant, en lavant et en séchant le catalyseur obtenu à l'étape i) à plusieurs reprises jusqu'à ce que le pH du détergent soit compris entre 6 et 7 ;
les étapes i) et ii) sont effectuées à une ou plusieurs températures comprises entre 10 °C et 100 °C;
le rapport entre le nombre total de moles du sel hydrosoluble de zinc et du sel hydrosoluble de cobalt et le nombre total de moles de l'acide mixte est compris entre 1:10 et 10:1.

6. Procédé selon la revendication 5, **caractérisé en ce que** les sels solubles de zinc dans l'eau à l'étape i) sont un ou plusieurs sels choisis dans le groupe constitué du chlorure de zinc, du bromure de zinc, de l'iodure de zinc, du sulfate de zinc et de l'acétate de zinc ; facultativement, les sels solubles de cobalt dans l'eau à l'étape i) sont choisis dans le groupe constitué de l'hexacyanocobaltate(lll) de sodium et l'hexacyanocobaltate(lll) de potassium ; facultativement, les étapes i) et ii) sont effectuées à une ou plusieurs températures comprises entre 10 et 80 °C, de préférence entre 20 et 60 °C, et de préférence encore entre 20 et 40 °C.

7. Procédé selon la revendication 5, **caractérisé en ce que** le sel hydrosoluble de zinc et le sel hydrosoluble de cobalt à l'étape i) sont dans un rapport molaire de 1:5 à 5:1, de préférence de 1:4 à 4:1, de préférence encore de 1:3 à 3:1, et de préférence encore de 1:2 à 2:1.

8. Procédé selon la revendication 5, **caractérisé en ce que** le rapport entre la masse totale du sel hydrosoluble de zinc et du sel hydrosoluble de cobalt et la masse du solvant à base d'eau est de 1:1 à 1:200, de préférence de 1:1 à 1:100, de préférence encore de 1:1 à 1:50, de préférence encore de 1:1 à 1:20, de préférence encore de 1:1 à 1:10, et de préférence encore de 1:1 à 1:5.

9. Procédé selon la revendication 5, **caractérisé en ce que** le rapport entre le nombre total de moles du sel hydrosoluble de zinc et du sel hydrosoluble de cobalt et le nombre total de moles de l'acide mixte est de 1:5 à 5:1, de préférence de 1:4 à 4:1, de préférence encore de 1:3 à 3:1, et de préférence encore de 1:2 à 2:1.

10. Procédé selon la revendication 6, **caractérisé en ce que** l'acide inorganique hydrosoluble et l'acide organique sont dans un rapport molaire de 1:8 à 8:1, de préférence de 1:5 à 5:1, de préférence encore de 1:3 à 3:1 ; facultativement, le solvant aqueux est un ou plusieurs choisis dans le groupe constitué de l'eau, du méthanol, de l'éthanol, du propanol et de ses isomères, du butanol et de ses isomères, de l'alcool amylique et de ses isomères, de l'hexanol et de ses isomères, de l'heptanol et de ses isomères.

11. Utilisation d'un catalyseur selon les revendications 1 à 4 ou préparé selon les revendications 5 à 10 pour la copolymérisation d'un époxyde avec du dioxyde de carbone.
